# EUROPÄISCHE PATENTSCHRIFT

(11) **EP 0 367 940 B1**
(45) Veröffentlichungstag und Bekanntmachung des Hinweises auf die Patenterteilung: **26.05.1993**
(21) Anmeldenummer: 89116709.0
(22) Anmeldetag: 09.09.1989
(51) Int. Cl.: B65G 47/244, B65G 47/84

(54) **Einrichtung zum Drehen eines länglichen Gegenstandes**
Turning device for an elongate article
Dispositif faisant tourner un objet allongé

(30) Priorität: 26.10.1988 DE 3836436
(43) Veröffentlichungstag der Anmeldung: 16.05.1990
(73) Patentinhaber: 4P Nicolaus Kempten GmbH, D-87437 Kempten (DE)
(72) Erfinder: Froideval, Patrick, F-60000 Beauvais (FR); Corlier, Jean-Pierre, F-60112 Herchies (FR)
(74) Vertreter: Hutzelmann, Gerhard

(56) Entgegenhaltungen:
- FR-A- 2 000 328
- GB-A- 1 292 378
- NL-A- 7 705 670
- US-A- 3 306 424
- US-A- 4 085 839

## Beschreibung

Die Erfindung bezieht sich auf eine Einrichtung zum Drehen eines länglichen Gegenstandes wie z.B. einer Faltschachtel während des Transportes um 90°.

Aus der DE-OS 37 10 105 und der GB-A-1 292 378 bereits derartige Dreheinrichtungen bekannt, wobei die Gegenstände mit ihrem Eigengewicht auf einer Transporteinrichtung aufstehen und dann von einer Dreheinrichtung übernommen werden, die in einer Kulissenführung gedreht und anschließend zurückgedreht wird.

Diese bekannten Dreheinrichtungen arbeiten zwar sehr zuverlässig, sind aber aufgrund ihrer konstruktiven Gegebenheiten verhältnismäßig langsam.

Der Erfindung liegt die Aufgabe zugrunde, eine Einrichtung der genannten Art so auszugestalten, daß die Gegenstände mit hoher Geschwindigkeit transportiert und gedreht werden können.

Diese Aufgabe wird durch die durch den Anspruch definierten Merkmale gelöst.

Die Ketten können mit hoher Geschwindigkeit bewegt werden, wodurch auch Transport und Drehung des Gegenstandes sehr schnell ablaufen.

Gemäß der Erfindung ist parallel zur ersten in Längsrichtung verlaufenden Kette eine weitere Transportkette vorgesehen, die mit Mitnehmern ausgerüstet ist, welche an der anderen Längsseitenwand des Gegenstandes angreifen, sobald dieser von einer schräg verlaufenden Kette wenigstens teilweise gedreht ist.

Dadurch wird der Drehvorgang des Gegenstandes sehr wirksam unterstützt und der Transportvorgang sehr zügig fortgesetzt.

Erfindungsgemäß ist eine Leitschiene vorgesehen, die hinter der schräg verlaufenden Kette angeordnet ist und in ihrem ersten Abschnitt parallel zu dieser verläuft, während sie sich in ihrem daran anschließenden Abschnitt in Richtung der Förderkette erstreckt.

Dadurch wird die Sicherheit des Drehvorganges und damit dessen hohe Geschwindigkeit gewährleistet.

Ebenfalls zur Sicherung des Drehvorganges dient es, wenn erfindungsgemäß auf der von der ersten Kette abgewandten Seite der weiteren Transportkette eine Leitschiene angeordnet ist, die parallel zu dieser verläuft und wenigstens im Bereich der schräg verlaufenden Kette vorgesehen ist.

In der Zeichnung ist der Gegenstand der Erfindung anhand eines Ausführungsbeispieles veranschaulicht. Dabei zeigen:
**Fig. 1** eine schematische Draufsicht einer Einrichtung zum Drehen eines länglichen Gegenstandes,
**Fig. 2** eine Seitenansicht dieser Einrichtung und
**Fig. 3** eine weitere Draufsicht mit mehreren Stellungen für den Gegenstand während der Drehbewegung.

Mit 1 sind in den Figuren längliche Gegenstände bezeichnet, die beispielsweise Faltschachteln sein können. Diese Gegenstände 1 liegen auf einer Kette 2 auf, die mit mehreren jeweils paarweise angeordneten Mitnehmern 3,4 versehen sind, die an der hinteren Kante der Gegenstände 1 angreifen und damit diese mit der Geschwindigkeit der Kette 1 transportieren.

Parallel zu dieser ersten Förderkette 2 verläuft eine weitere Transportkette 5, auf der verhältnismäßig breite Mitnehmer 6,7 paarweise angeordnet sind. Schräg über diese beiden Ketten 2,5 verläuft eine weitere Kette 8, an der nach unten abstehende Finger 9 angeordnet sind. Diese Finger 9 greifen an der äußeren Längsseitenwand 10 des Gegenstandes 1, und zwar in deren vorderen Abschnitt, wodurch das vordere Ende des Gegenstandes gegen die Transportkette 5 gelenkt wird. Die gegenüber den Mitnehmern 3,4 etwas nach hinten versetzten Mitnehmer 6,7 der Transportkette 5 greifen dann an der anderen Längsseitenwand 11 des Gegenstandes 1 an und vollenden die Drehbewegung; gleichzeitig bewirken sie den Weitertransport der Gegenstände.
An der von der Kette 2 abgewandten Seite der Transportkette 5 ist im Bereich der schräg verlaufenden Kette 8 eine Leitschiene 12 vorgesehen, die parallel zur Transportkette 5 verläuft und sicherstellt, daß die Schrägbewegung des Gegenstandes beendet wird. Auf der gegenüberliegenden Seite ist ebenfalls eine Leitschiene 13 angeordnet, die in ihrem ersten Abschnitt parallel zur schräg angeordneten Kette 8 verläuft und sich in ihrem weiteren Verlauf in Richtung der Transportkette 5 erstreckt. Diese Leitschiene 13 dient der Sicherung von Transport und Drehung der Gegenstände 1.

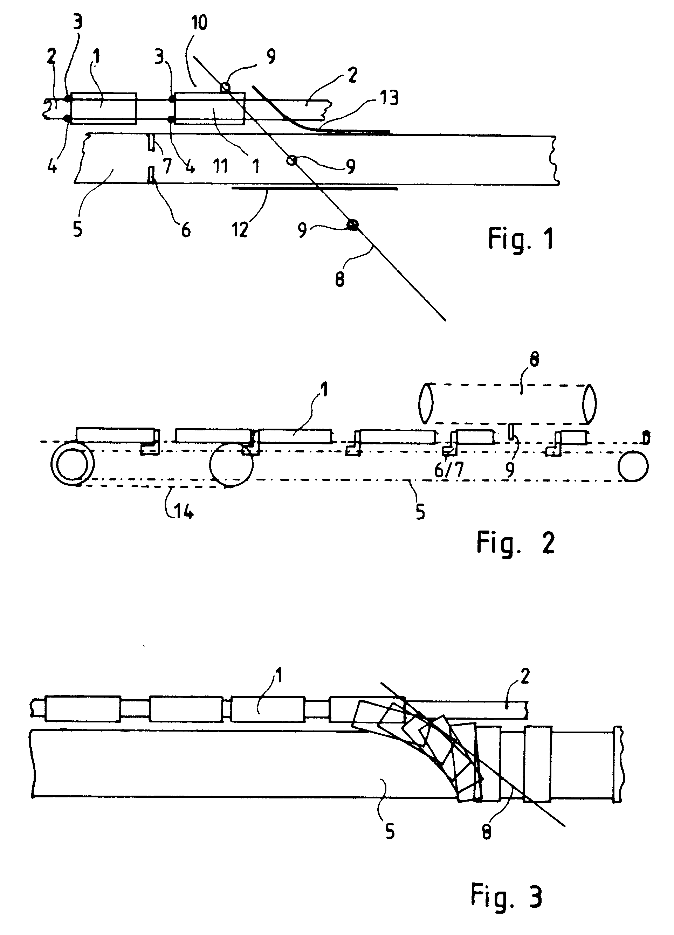

In Fig. 2 ist noch ein weiterer Förderer 14 dargestellt, welcher der Beschleunigung der Gegenstände 1 dient, damit diese in verhältnismäßig geringem Abstand an der schräg verlaufenden Kette 8 ankommen.

## Patentansprüche

1. Einrichtung zum Drehen von länglichen Gegenständen(1) wie Faltschachteln um 90° während der Übergabe von einer ersten Förderkette(2) mit Mitnehmern(3,4), welche die aufliegenden Gegenstände(1) in ihrer Längsrichtung transportiert, auf eine parallel dazu verlaufende zweite Förderkette(5) mit gleicher Förderrichtung, wobei eine die Förderketten(2,5) schräg überspannende weitere Kette(8) vorgesehen ist, die nach unten abstehende Finger(9) aufweist, die jeweils an einer Längsseitenwand(10) des Gegenstandes(1) in dessen vorderem Abschnitt angreifen und den Gegenstand(1) drehen und hinter der schräg verlaufenden Kette(8) eine Leitschiene(13) vorgesehen ist, die auf der Seite der ersten Förderkette(2) in ihrem ersten Abschnitt parallel zu der Kette(8) verläuft, während sie sich in ihrem weiteren Verlauf in Richtung der zweiten Förderkette(5) auf deren zur ersten Förderkette(2) zugewandten Seite erstreckt, wobei die zweite Förderkette(5) Mitnehmer(6,7) für die Gegenstände(1) aufweist, eine Leitschiene(12) auf der von der ersten Förderkette(2) abgewandten Seite der zweiten Förderkette(5) angebracht ist, parallel zu dieser verläuft und wenigstens im Bereich der schräg verlaufenden Kette(8) vorgesehen ist, die Mitnehmer(3,4,6,7) der Förderketten(2,5) sowie die Finger(9) der schräg verlaufenden Kette(8) derart positioniert sind, daß sich in Transportrichtung die Mitnehmer(3,4) der ersten Förderkette(2) vor den Mitnehmern(6,7) der zweiten Förderkette(5), aber hinter dem jeweils im Eingriff mit der Längsseitenwand(10) des Gegenstandes(1) befindlichen Finger(9) der schräg verlaufenden Kette (8) befinden, und wobei das vordere Ende des Gegenstandes(1) durch den an der Längsseitenwand(10) angreifenden Finger(9) gegen die zweite Förderkette(5) gedreht wird und dann die Mitnehmer(6,7) der zweiten Förderkette(5) an der anderen Längsseitenwand(11) des Gegenstandes(1) angreifen und die Drehbewegung vollenden.

## Claims

1. Apparatus for turning rectangular objects (1), such as folding cartons, through 90° during their transfer from a first transport chain (2) with lugs (3,4), which transports the objects (1) resting on it in their longitudinal direction, to a parallel second transport chain (5) moving in the same direction, where a further chain (8) that crosses over the transport chains (2,5) at an angle is provided which has fingers (9) projecting downwards that engage the front section of a longitudinal side panel (10) of the object (1) and turn the object (1) and where a guide bar (13) is provided which is located behind the chain (8) that runs at an angle to the transport chains and which runs parallel to the chain (8) in its first section on the side of the first transport chain (2), while its subsequent section runs in the direction of the second transport chain (5) on the side facing the first transport chain (2), where the second transport chain (5) has lugs (6, 7) for the objects (1), a guide bar (12) is attached on the side of the second transport chain (5) facing away from the first transport chain (2), runs parallel to the same and is provided at least in the area of the chain (8) that runs at an angle, where the lugs (3, 4, 6, 7) of the transport chains (2, 5) and the fingers (9) of the chain (8) that runs at an angle are positioned in such a way that in transport direction the lugs (3, 4) of the first transport chain (2) are before the lugs (6, 7) of the second transport chain (5) but are behind the fingers (9) of the chain (8) that runs at an angle which are engaging the longitudinal side panel (10) of the object (1), and where the front end of the object (1) is turned towards the second transport chain (5) by the fingers (9) engaging the longitudinal side panel (10) and then the lugs (6, 7) of the second transport chain (5) engage the other longitudinal side panel (11) of the object (1) and complete the turning movement.

## Revendications

1. Dispositif pour tourner des objets allongés (1), tels que des boîtes dépliables, d'un angle de 90 degrés pendant le transfert depuis une première chaîne de transport (2), équipée d'organes d'entraînement (3,4), transportant dans sa direction longitudinale les objets (1) couchés dessus, sur une deuxième chaîne de transport (5), lui étant parallèle et ayant le même sens de transport, une chaîne supplémentaire (8) franchissant de façon oblique les chaînes de transport (2,5) et présentant des doigts (9), faisant saillie vers le bas, agissant chaque fois sur une paroi latérale longitudinale (10) de l'objet, dans sa section avant, et faisant tourner l'objet (1) et derrière la chaîne (8) s'étendant de façon oblique étant prévu un rail de guidage (13), s'étendant sur le côté de la première chaîne de transport (2), parallèlement à la chaîne (8) dans sa première section, tandis que, dans la suite de son évolution, il s'étend en direction de la deuxième chaîne de transport (5), sur son côté tourné vers la première chaîne de transport (2), la deuxième chaîne de transport (5) présentant des organes d'entraînement (6,7) pour les objets (1), un rail de guidage (12) étant monté du côté, opposé à la première chaîne de transport (2), de la deuxième chaîne de transport (5), en s'étendant parallèlement à celle-ci, et prévu au moins dans la zone de la chaîne s'étendant obliquement (8), les organes d'entraînement (3,4,6,7) des chaînes de transport (2,5) ainsi que les doigts (9) de la chaîne (8) disposée obliquement étant positionnés de telle façon que, dans la direction du transport, les organes d'entraînements (3,4) de la première chaîne de transport (2) se trouvent devant les organes d'entraînement (6,7) de la deuxième chaîne de transport (8), mais derrière le doigt (9) se trouvant chaque fois en contact avec la paroi latérale longitudinale (10) de l'objet (1), de la chaîne s'étendant obliquement (8), et l'extrémité avant de l'objet (1) étant tournée vers la deuxième chaîne de transport (5), au moyen du doigt (9) agissant sur la paroi latérale longitudinale (10) et, ensuite, les organes d'entraînement (6,7) de la deuxième chaîne de transport (5) agissant sur l'autre paroi latérale longitudinale (11) de l'objet (1) et achevant le mouvement de rotation.
